# EUROPEAN PATENT APPLICATION

(11) **EP 4 206 838 A1**
(43) Date of publication of application: **05.07.2023**
(21) Application number: 21218047.5
(22) Date of filing: 29.12.2021
(51) Int. Cl.: G05B 23/02, G06N 20/00, C08F 2/00

(54) **FORECASTING AND ANOMALY DETECTION METHOD FOR LOW DENSITY POLYETHYLENE AUTOCLAVE REACTOR**

(71) Applicant: Petkim Petrokimya Holding A.S., Aliaga-Izmir (TR)
(72) Inventor: EZDESIR, Ayhan, Izmir (TR); YURTSEVEN, Merve, Izmir (TR); KUCUK, Ali, Izmir (TR); INAN, Muhammed, Izmir (TR); UNER, Deniz, Ankara (TR); ALPASLAN, Ferda Nur, Ankara (TR); ISYAPAR, Muhammet Tugberk, Ankara (TR)
(74) Representative: Sevinç, Cenk

(57) **Abstract**

The present invention relates to a forecasting method for a low-density polyethylene autoclave reactor that enables future estimation and detection of anomalies by generating deep learning models with real-time sensor data in a low density polyethylene autoclave reactor.

## Description

### Technical Field of the Invention

The present invention relates to a forecasting method for a low-density polyethylene autoclave reactor that enables future estimation and detection of anomalies by generating deep learning models with real-time sensor data in a low-density polyethylene autoclave reactor.

### State of the Art

In the LDPE (low density polyethylene) factory, process control is provided by traditional mechanisms, and the processes are monitored by experts in the digital contol system DCS room and in the plant. However, from time to time, reaction runaway anomalies occur and these cases can damage human, economic and natural resources.

The main process control strategy is based on the principle of keeping pressure and reactor zone temperatures within certain limits. However, due to the highly non-linear system behavior with respect to the changes in the system parameters, anomalies may occur that can lead to serious damage.

Detecting anomalies and estimating future values by using time series data collected from sensors, have been used in various fields.

In the state of the art, the invention that is the subject of the application numbered "JP2021064099A" proposes a method of predicting anomalies from device image data or sensor data using machine learning. However, it is not mentioned that estimating the temperature values expected to be obtained in the zones by using reactor pressure, mixer current, and power and catalyst values, and thereby revealing the effects of different production parameters on the phase of the reaction.

In the state of the art, the invention that is the subject of the application numbered "WO2020068382A2" relates to an anomaly detection device and an anomaly detection method for early detection of an anomaly based on a plurality of time series sensor signals generated by the plant, equipment, or the like. However, it only detects anomaly over the distribution of points among themselves, and it does not take into account the complex nonlinear relations between and among themselves and the ordered measurements that determine a state of the system.

In the methods in the state of the art, measurements of process pressure, temperature, and catalyst flow rate are continuously recorded by sensors. Modeling the time-based data using machine learning methods, creates a potential for near-future value estimations and detection of unusual cases, thus allowing a data-based expert system that can generate significant information for process control.

Consequently, the disadvantages disclosed above and the inadequacy of available solutions in this regard necessitated making an improvement in the relevant technical field.

### Objects of the Invention

The present invention relates to a forecasting method that enables future estimation and detection of anomalies by generating deep learning models using real-time sensor data in a low-density polyethylene autoclave reactor.

The most important aim of the present invention is to provide value estimations for the near future by means of modeling the data collected over time by using machine learning methods.

Another aim of the present invention is to detect the cases that are considered unusual.

Another aim of the present invention is to immediately detect the anomalies experienced and improve the control in the reactor by providing the relevant warning to the control room through presenting the data to the model in real time.

Another aim of the present invention is to prevent the losses resulting from monitoring the values by the human operators.

Another aim of the present invention is to produce outputs that will constitute important information by processing only the available data without requiring any additional equipment in the factory except the computers.

Structural and characteristic features of the present invention as well as all advantages thereof will become clear through the attached figures and the following detailed description provided by making references thereto. Therefore, the assessment should be made by taking these figures and the detailed description into consideration.

### Description of the Figures

**Figure -1** illustrates the schematic flow diagram of the method according to the present invention.

### Reference Numerals

**100.** Forecasting method in a low-density polyethylene autoclave reactor
**101.** Preprocessing the collected sensor data by classifying them according to the production type
**102.** Determining the adjustable weights of the model of which hyperparameters are determined over the training set
**103.** Revealing the degree of competence by calculating the error related to the estimation made by the model
**104.** Evaluating the performance of the model by applying a realistic test data set thereto
**105.** Creating the user interface by making the model, which passed the performance tests, usable in the field

### Description of the Invention

The present invention relates to a forecasting method that enables future estimation and detection of anomalies by generating deep learning models with real-time sensor data in a low-density polyethylene autoclave reactor.

In the LDPE factory, process control is provided by traditional mechanisms, and the processes are monitored by experts in the DCS control room and in the plant. The main control variables are pressure and reactor zone temperatures. However, despite this practice, anomalies may occur and lead to serious damage. Forecasting method in low-density polyethylene autoclave reactor (100) presents the data to the machine learning generated model and allows for immediate detection of the anomalies and provides the relevant warning to the control room, thereby improving the control in the reactor. The method will be effective in preventing various losses that may occur in the process due to human errors and can be further used as a tool for detailed monitoring of the ongoing processes. Additionally, near future values can be estimated by using the measured values characterizing the current state of the reactor, which can be used for determining anomalies.

Forecasting method in a low-density polyethylene autoclave reactor (100) consists of; preprocessing the collected sensor data by classifying it according to the production type (101), determining the adjustable weights of the model of which hyperparameters are determined over the training set (102), revealing the degree of competence by calculating the error related to the estimation made by the model (103), evaluating the performance of the model by applying a realistic test data set thereto (104), creating the user interface by making the model usable in the field (105), on the server.

In the process data preprocessing step of preprocessing the collected sensor data by classifying them according to the production type (101), collected sensor data need to be separated are classified according to production type (101). Then, the data integrity is checked to see if there are missing or incorrect data. Measurements that are considered relevant are retained in the data, while the rest are removed from the data set. Relevant feature extraction is performed on the collected measurements. This process includes identifying and digitizing more complex features to relate the measurements and the value designs inherent in the plant's operating mechanism, such as calculating the sum of catalyst flow rates specific to certain zones and simpler operations, such as calculating the difference between set points and measured values. The data are transferred to the appropriate high or low resolution according to the decided operation range. Inputs and outputs may come from different measurements. For example, it may be necessary to forecast the temperatures in the zones as output based on the pressure and catalyst flow rate given as inputs. The data are divided into training, validation, and test sets. While training and validation sets are generally chosen from the steady state cases, the test set should include cases with anomalies. In order to balance the impact of features on forecasting, they are normalized or standardized to similar ranges by using the data in the training set. Scaling parameters learned from the training set are also used in order to scale the data in the validation and test sets. In time series datasets received from sensors, each row belonging to a certain moment is called a record, and each record is used in order to extract intersecting/non-intersecting subsequences by using sliding windows method. More complex feature extraction operations can be applied, such as applying the Fourier transform on the resulting sequences.

In the process step of determining the adjustable weights of the model of which hyperparameters are determined over the training set (102), appropriate models are determined for the anomaly detection and future estimation modules, by considering the data length, the nature of the relation between consecutive moments, and the patterns extracted from the features of this data. Long Short Term Memory Network (LSTM), enhanced by the attention mechanism in solving long correlations, is used in both anomaly detection and estimation modules. Hyperparameters such as the number of layers of this network, the number of neurons per layer, the design of the autoencoder structure, the activation function used, whether regularization and dropout will be applied, and the detection of the time dependent change function of the learning rate are determined by applying the learning method on the training and validation data sets. Typically, the loss function which determines how much the input data converges to the output is used in anomaly detection, while the loss function which digitizes the difference between the estimations and the actual values is applied in future estimation. The parameters of the network are determined at the point where this function reaches its lowest values through the determined optimization algorithm. How long the training will take and at what moment saturation will be decided is determined by the model's performance in the validation data set.

In the process step of revealing the degree of competence by calculating the error related to the estimation made by the model (103), it is calculated which values the selected model reaches in the training and validation data sets in accordance with various performance metrics. It is monitored by how the data of different situations differ from each other by extracting the histograms of the obtained errors.

In the process step of evaluating the performance of the model by applying a realistic test data set thereto (104), test data set is presented to the model as input, and the outputs obtained are digitized together with the inputs by means of the performance metrics determined in the previous step. The histograms of the metric values in different samples of the test set are calculated and their distributions are monitored. In general, in steady state data, the best selected model is expected to produce an error profile with Normal Distribution, while an error histogram converging to the Exponential Distribution should be expected in data for unusual situations.

In the process step of creating the user interface by making the model, which passed the performance tests, usable in the field (105) The models that detect anomalies and make estimations are finalized in line with the values of the selected performance metrics and are made to be applied to the continuously flowing sensor data in practice. The output produced at that moment in the anomaly detection module for the time series extracted in the relevant window size, the estimated values for the future, and the outputs of these values by the anomaly detection module are transmitted in the field with graphics. In case the obtained error exceeds a certain value, various warnings may be given. It is stated in the warning for which measurements the values obtained with the estimated values differ in particular.

In the forecasting method in a low-density polyethylene autoclave reactor (100), by creating data-based machine learning models from three different perspectives regarding steady state in an LDPE autoclave reactor, instead of analysis that can be performed by measuring the residence time distribution with external chemical intervention in order to associate the outputs of the relevant models with the detection of extraordinary situations and to determine the disruptions in the system behavior in chemical processes, residence time distribution information of the statistical distributions created by the machine learning algorithms using the data collected in the system by comparing the steady state and similar standard conditions with instant measurements are used and the detection of anomaly situations in the system are achieved.

By means of using steady-state data, an autoencoder model is learned using reactor pressure, mixer current and mixer power, zone temperatures, catalyst flow rate, and output temperatures. By using reactor pressure, mixer current, mixer power and catalyst flow rate, it is possible to estimate the expected temperature values in the zones, and thereby, revealing the effects of different production parameters on the state of the reaction. The future values of all relevant variables are estimated by using the past values, and this process is carried out by means of algorithms that are considered suitable for different estimation distances.

In accordance with the approaches of learning a representation with autoencoder structures by using reactor pressure, mixer current, mixer power, zone temperatures, and catalyst flow rate, outlet temperatures within certain sufficiently long window value that reflect the characteristics of the system, and reactor pressure in zones, mixer current and power, and catalyst values, expected temperature values and thereby, revealing the effects of different production parameters on the state of the reaction, the estimated values are obtained and the margins of related error are recorded. Future values of all relevant variables are estimated by using the past values and regarding different forecasting distances. The steady state of the system is modeled with autoencoder structures by using reactor pressure, mixer current and power, zone temperatures, and catalyst flow rates, outlet temperatures, and expected temperature values in the zones, mixer current, and power and catalyst flow rates. Thus, it becomes possible to evaluate the state of the system both in its current state and in the future states.

In addition, confidence intervals are given for the estimations by means of Dropout layers and Monte Carlo simulations. Confidence intervals for the estimation, the features produced by the artificial neural networks in using the estimated values, the difference between the estimations and the obtained values provided to the classification models (steady / unsteady - can be generalized to labeled subcategories) are used in classifying the state of the system.

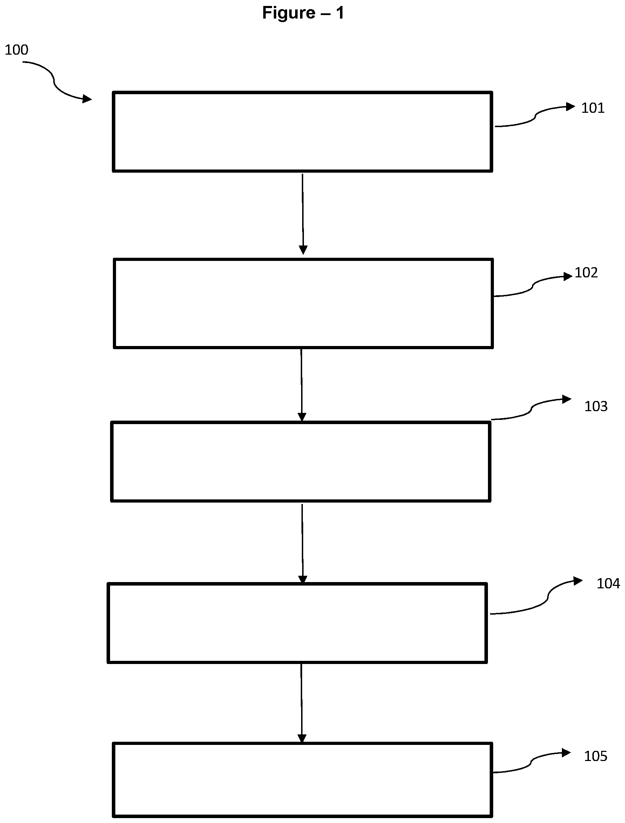

## Claims

1. A forecasting method in a low-density polyethylene autoclave reactor (100) that enables future estimation and detection of anomalies by generating deep learning models with real-time sensor data in a low-density polyethylene autoclave reactor, **characterized in that**, the method comprises the process steps of;
preprocessing the collected sensor data by classifying them according to the production type (101),
determining the adjustable weights of the model of which hyperparameters are determined over the training set (102),
revealing the degree of competence by calculating the error related to the estimation made by the model (103),
evaluating the performance of the model by applying a realistic test data set thereto (104),
creating the user interface by making the model, which passed the performance tests, usable in the field (105),
executed on the server.

2. A forecasting method in a low-density polyethylene autoclave reactor (100) according to Claim 1, **characterized in that**, in the process step of preprocessing the collected sensor data by classifying them according to the production type (101), data is investigated to see if there are missing or incorrect values and the measurements that are considered to be relevant are kept in the data set, while the rest is removed from the data set by controlling the data integrity.

3. A forecasting method in a low-density polyethylene autoclave reactor (100) according to Claim 1, **characterized in that**, in the process step of preprocessing the collected sensor data by classifying them according to the production type (101), relevant feature extraction is performed on the collected data.

4. A forecasting method in a low-density polyethylene autoclave reactor (100) according to Claim 1, **characterized in that**, in the process step of preprocessing the collected sensor data by classifying them according to the production type (101), the sum of the catalyst flow rates specific to certain zones is calculated to identify and digitize the more complex features that will relate the value designs and measurements inherent in the plant's operating mechanism by means of calculating the difference between the setpoints and the measured values.

5. A forecasting method in a low-density polyethylene autoclave reactor (100) according to Claim 1, **characterized in that**, in the process step of preprocessing the collected sensor data by classifying them according to the production type (101), the data is transferred to the appropriate high or low resolution according to the range agreed on.

6. A forecasting method in a low-density polyethylene autoclave reactor (100) according to Claim 1, **characterized in that**, in the process step of preprocessing the collected sensor data by classifying them according to the production type (101), the data are split into training, validation, and test sets. Test sets include samples of extraordinary situations and the data in test sets are not used in the other sets

7. A forecasting method in a low-density polyethylene autoclave reactor (100) according to Claim 1, **characterized in that**, in the process step of preprocessing the collected sensor data by classifying them according to the production type (101), the obtained future values are normalized or standardized using the data in the training set since the features have different value ranges,

8. A forecasting method in a low-density polyethylene autoclave reactor (100) according to Claim 1, **characterized in that**, in the step of preprocessing the collected sensor data by classifying them according to the production type (101), the relevant parameters learned from the training set are used in order to scale the data in the validation and test sets.

9. A forecasting method in a low density polyethylene autoclave reactor (100) according to Claim 1, **characterized in that**, in the process step of determining the adjustable weights of the model of which hyperparameters are determined over the training set (102), appropriate models are determined for the anomaly detection and future estimation modules, by considering the data length, the nature of the relation between consecutive moments, and the patterns extracted from the features of this data.

10. A forecasting method in a low-density polyethylene autoclave reactor (100) according to Claim 1, **characterized in that**, in the process step of determining the adjustable weights of the model of which hyperparameters are determined over the training set (102), the long short-term memory network powered by the attention mechanism in solving long correlations is used in both anomaly detection and estimation modules.

11. A forecasting methodin a low-density polyethylene autoclave reactor (100) according to Claim 1, **characterized in that**, in the process step of determining the adjustable weights of the model of which hyperparameters are determined over the training set (102), hyperparameters such as the number of layers of this network, the number of neurons per layer, the design of the autoencoder structure, the activation function used, whether regularization and dropout will be applied, and the detection of the time dependent change function of the learning rate are determined using training and validation data.

12. A forecasting method in a low-density polyethylene autoclave reactor (100) according to Claim 1, **characterized in that**, in the process step of determining the adjustable weights of the model of which hyperparameters are determined over the training set (102), the loss function that determines how much the input data converges to the output is used in anomaly detection, while the loss function that digitizes the difference between the estimations and the actual values is used in the future estimation.

13. A forecasting method in a low density polyethylene autoclave reactor (100) according to Claim 1, **characterized in that**, in the process step of revealing the degree of competence by calculating the error related to the estimation made by the model (103), the values obtained in the training and validation sets are calculated and the histograms of the errors obtained are extracted and it is monitored to see how the data of different situations differ from each other.

14. A forecasting method in a low-density polyethylene autoclave reactor (100) according to Claim 1, **characterized in that**, in the process step of evaluating the performance of the model by applying a realistic test data set thereto (104), data separated as a test set is presented to the model as input, and the outputs obtained are digitized along with the inputs according to the performance metrics determined in the previous stage.

15. A forecasting method in a low-density polyethylene autoclave reactor (100) according to Claim 1, **characterized in that**, in the process step of evaluating the performance of the model by applying a realistic test data set thereto (104), histograms of metric values are calculated for different samples of the test set and their distributions are monitored.

16. A forecasting method in a low-density polyethylene autoclave reactor (100) according to Claim 1, **characterized in that**, in the process step of creating the user interface by making the model, which passed the performance tests, usable in the field (105), the models that detect anomalies and make estimations are finalized according to the selected performance metrics and are made to be applied to the continuously flowing sensor data in practice.

17. A forecasting method in a low-density polyethylene autoclave reactor (100) according to Claim 1, **characterized in that**, in the process step of creating the user interface by making the model, which passed the performance tests, usable in the field (105), the output produced at that moment in the anomaly detection module for the time series extracted in the relevant window size, the estimated values for the future, and the outputs of these values are transmitted in the field with graphics by the anomaly detection module.

18. A forecasting method in a low-density polyethylene autoclave reactor (100) according to Claim 1, **characterized in that**, in the process step of creating the user interface by making the model, which passed the performance tests, usable in the field (105), warnings are generated in case the obtained error exceeds a certain value.
